# EUROPEAN PATENT APPLICATION

(11) **EP 3 556 614 A1**
(43) Date of publication of application: **23.10.2019**
(21) Application number: 19169370.4
(22) Date of filing: 16.04.2019
(51) Int. Cl.: B60R 21/18

(54) **ADJUSTABLY POSITIONABLE AIRBAG ASSEMBLIES AND ASSOCIATED SYSTEMS AND METHODS**

(30) Priority: 17.04.2018 US 201815955193
(71) Applicant: AmSafe, Inc., Phoenix, AZ 85043 (US)
(72) Inventor: HUMBERT, Todd, Chandler,, AZ Arizona 85286 (US); CRUPI, James, Mesa,, AZ Arizona 85207 (US); LANGSTON, Lee, Gold Canyon,, AZ Arizona 85118 (US)
(74) Representative: Grünecker Patent- und Rechtsanwälte PartG mbB

(57) **Abstract**

Adjustably positionable airbag assemblies and associated systems and methods are described herein. An occupant restraint system configured in accordance with embodiments of the present technology can include, for example, an airbag stowed and carried on a seat belt web of the occupant restraint system in an aircraft. The occupant restraint system can further include a fastening assembly configured to receive a web of the occupant restraint system. In a first mode, the fastening assembly is slidable along at least a portion of the web. In a second mode, the fastening assembly is coupled to the airbag and secured (e.g., clamped) to the web in a selected position. The airbag is configured to inflate in response to a rapid deceleration event and deploy in front of a seat occupant.

## Description

### TECHNICAL FIELD

The following disclosure relates generally to occupant restraint systems for use in an aircraft and other vehicles, and more specifically to occupant restraint systems having airbags.

### BACKGROUND

Various types of seat belts and other occupant restraint systems have been used to protect passengers in automobiles, aircraft and other vehicles. Automobiles, for example, typically include both seat belts and airbags. Airbags can be stored in the steering column, dashboard, side panel, and/or other fixed locations. During a rapid deceleration event (e.g., a collision), a sensor detects the event and transmits a corresponding signal to an initiation device (e.g., a pyrotechnic device) on an airbag inflator. This causes the inflator to release compressed gas into the airbag, thereby rapidly inflating the airbag to protect the seat occupant.

Although airbags that deploy from stationary locations (e.g., a steering column) may be effective in automobiles, they may not be as effective in other types of vehicles having other seating arrangements. Seats in general aviation aircraft, for example, can be configured in a variety of layouts that provide different spacing for individual seats, and thus can require unique airbag configurations. The seatbacks may also rotate forward and downward during a crash or similar event, and thus may be unsuitable for airbag storage. As a result, airbags have been developed that deploy from seat belts on aircraft. One drawback of such systems, however, is that airbags are typically designed for a particular type of seat, and thus may be unsuitable for use in other types of seating arrangements.

### BRIEF DESCRIPTION OF THE DRAWINGS

Figure 1 is a top isometric view of an occupant restraint system having an airbag assembly configured in accordance with embodiments of the present technology.
Figures 2A and 2B are top and side views, respectively, of the airbag assembly and an associated web portion of the occupant restraint system of Figure 1.
Figure 2C is a partially exploded top isometric view of a portion of the occupant restraint system of Figures 1-2B showing a fastening assembly configured in accordance with embodiments of the present technology.
Figures 3A and 3B are top and side views, respectively, of another web portion of the occupant restraint system of Figures 1-2C, configured in accordance with embodiments of the present technology.
Figures 4A-4K are a series of views illustrating a method of forming an airbag assembly in accordance with embodiments of the present technology.
Figures 5A, 5B and 5C are top, bottom and side views, respectively, of a cover assembly configured in accordance with embodiments of the present technology.
Figures 6A-6E are a series of side views illustrating a method of assembling an occupant restraint system in accordance with embodiments of the present technology.
Figure 7A is a partially schematic front view of the occupant restraint system shown in Figures 1-2C, illustrating a deployed airbag in accordance with embodiments of the present technology.
Figure 7B is a schematic view of an electronics assembly configured in accordance with embodiments of the present technology.

### DETAILED DESCRIPTION

The present disclosure describes various embodiments of occupant restraint systems having an adjustably positionable airbag that can inflate and deploy in front of a seat occupant to provide a cushioning barrier between the occupant and, e.g., a strike hazard. In some embodiments, the airbag is stowed and carried on a seat belt web of the occupant restraint system in an aircraft. A hose extends from the stowed airbag to an inflator that can be mounted under the seat or in another suitable location. If the aircraft experiences an accident or other significant dynamic event (e.g., a rapid deceleration event) in which the occupant could be thrown forward against a strike hazard, the inflator rapidly releases compressed gas into the airbag via the hose, causing the airbag to rapidly inflate and deploy from the web in front of the occupant.

As described in greater detail below, in some embodiments the occupant restraint system includes one or more fastening assemblies configured to slidably receive the seat belt web. The one or more fastening assemblies can be coupled to the airbag assembly, and are operable in a first configuration ("first mode") in which the fastening assemblies are slidable along at least a portion of a length of the web so that the airbag can be moved to a desired position on the web. The one or more fastening assemblies are also operable in a second configuration ("second mode"), in which the fastening assemblies can be fixedly attached to the web to secure the airbag assembly in the desired position. The ability to (a) move the fastening assemblies along the web in the first mode, and (b) secure the fastening assemblies to the web in the second mode enables the airbag to be properly positioned on the web, thereby allowing the occupant restraint system to be used on a variety of different seat applications.

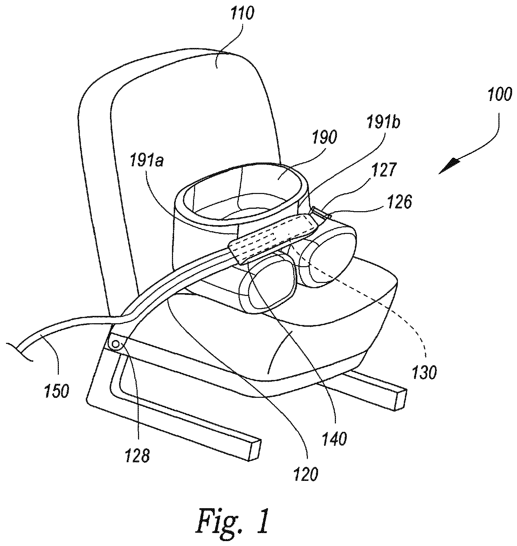

Certain details are set forth in the following description and Figures 1-7B to provide a thorough understanding of various embodiments of the disclosure. For example, several embodiments of the occupant restraint system are described below in the context of a private or general aviation aircraft. However, the occupant restraint system and aspects thereof disclosed herein may be used in a wide variety of other vehicles, including other aircraft (e.g., commercial and military aircraft), ground vehicles (e.g., automobiles, trucks, buses, trains, and motor homes), watercraft, etc. To avoid unnecessarily obscuring the description of the various embodiments of the disclosure, some details describing well-known structures and systems often associated with airbags, related circuitry, occupant restraint systems, etc., have not been described in detail below.

Furthermore, many of the details, dimensions, angles and other features shown in Figures 1-7B are merely illustrative of particular embodiments of the disclosure. Accordingly, some embodiments can include other details, dimensions, angles and features without departing from the spirit or scope of the present disclosure. In addition, those of ordinary skill in the art will appreciate that further embodiments of the adjustably positionable airbag assemblies disclosed herein can be practiced without several of the details described below.

In Figures 1-7B, identical reference numbers identify identical or at least generally similar elements. To facilitate the discussion of any particular element, the most significant digit or digits of any reference number refer to the particular figure in which that element is first introduced. For example, element 110 is first introduced and discussed with reference to Figure 1.

Figure 1 is a top isometric view of an occupant restraint system 100 configured in accordance with embodiments of the present technology. In the illustrated embodiment, the occupant restraint system 100 is configured to secure an occupant in a vehicle seat 110. The seat 110 can be positioned in various orientations and in a variety of vehicles, such as aircraft (e.g., private, commercial, and/or military airplanes, helicopters, etc.), ground vehicles (e.g., private, commercial, and/or military automobiles, trucks, buses, trains, etc.), watercraft, spacecraft, etc. The occupant restraint system 100 can include one or more webs or web portions forming a seat belt configured to extend around the occupant and be connected together with one or more buckle assemblies. In the illustrated embodiment, for example, the occupant restraint system 100 includes a web 120 having a connector assembly 126 configured to be releasably attached to a buckle assembly 127 carried by another web (not shown in Figure 1) on an opposite side of the seat 110. The web 120 can be made from conventional woven seat belt material (e.g., nylon), and can be part of a multi-point belt, such as a two-point seat belt (as shown in the illustrated embodiment), a three-point seat belt with a shoulder strap, a four-point seat belt with left and right shoulder straps, etc. The web 120 can include an end fitting 128 attached to an anchor point on the seat 110, or to a structure near the seat 110 (e.g., an anchor point on the floor).

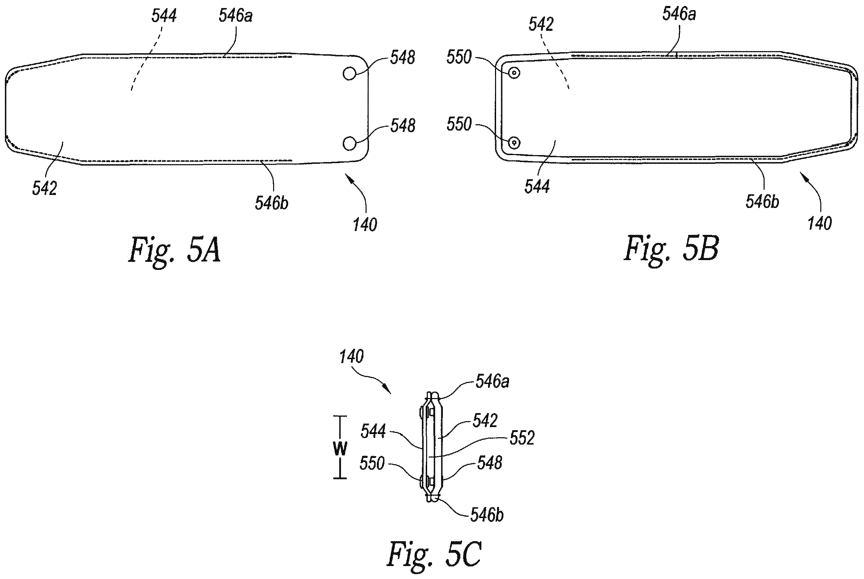

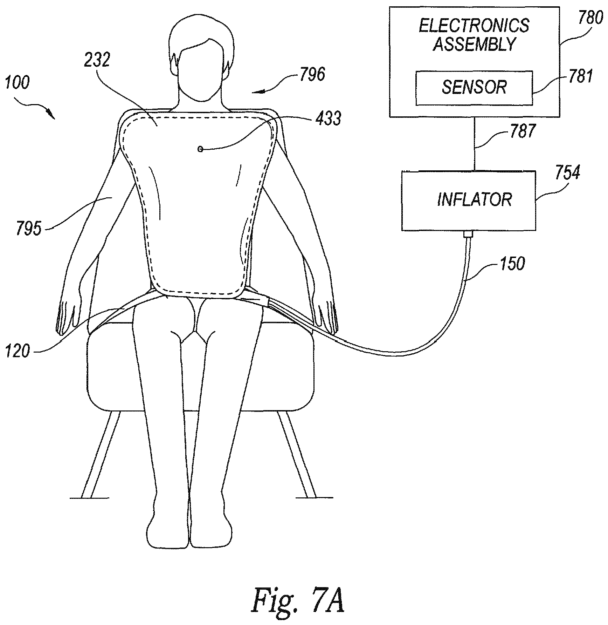

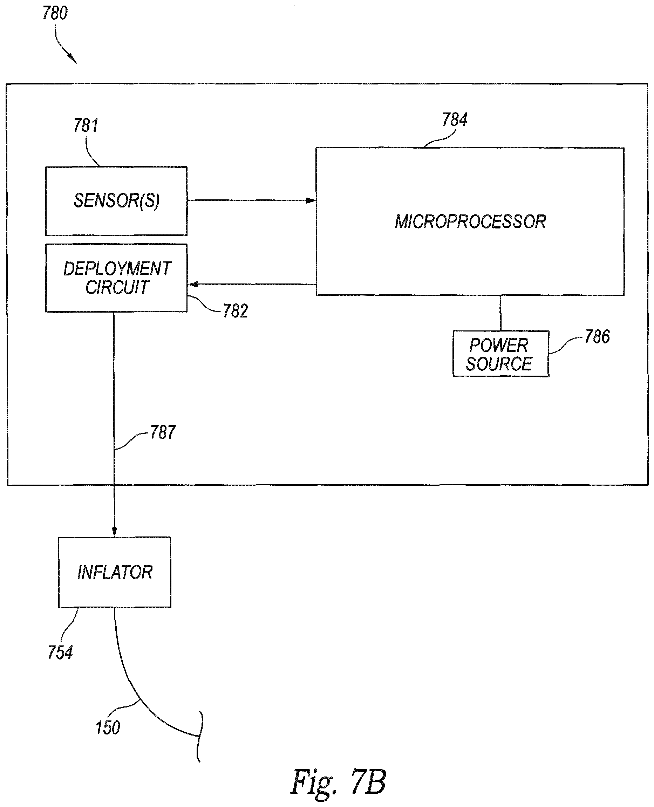

In the illustrated embodiment, the occupant restraint system 100 further includes an airbag assembly 130 carried by and coupled to the web 120, and a hose 150 operably coupled to the airbag assembly 130 and configured to deliver gas thereto. The hose 150 can be a flexible fabric hose made from nylon or other suitable materials known in the art (e.g., Kevlar, polyurethane, etc.) that enable a high pressure gas flow path to be provided from an inflator (not shown in Figure 1) to the airbag assembly 130, as described below with reference to Figures 7A and 7B. The occupant restraint system 100 can also include a cover assembly 140 that at least partially encloses the airbag assembly 130. The cover assembly 140 is described in more detail below, e.g., with reference to Figures 5A-5C.

In one aspect of the present technology, the airbag assembly 130 can be adjustably positioned on the web 120 and then fixed in a particular position. More specifically, the airbag assembly 130 can be moved along the web 120 to position it in a proper location relative to the seat occupant, and then fixed in the proper location. The position of the airbag assembly 130 can be adjusted to accommodate the configuration of the particular seat on which the occupant restraint system 100 is to be installed, and/or to accommodate the expected dimensions of the average seat occupant. For example, as illustrated in Figure 1, a body block 190 can be used to help an installer properly position the airbag assembly 130 along the web 120. The body block 190 can represent the dimensions of an expected occupant (e.g., a 50th percentile adult male) and can be used to determine where along the web 120 the airbag assembly 130 should be fixed. In the illustrated embodiment, the body block 190 includes one or more indicator markings, 191a, 191b that are symmetrically positioned relative to a centerline of the body block 190. During installation, the airbag assembly 130 can be slidably moved along the web 120 until the airbag assembly 130 is aligned (e.g., centered), or at least approximately aligned, with the indicator markings 191a, 191b. Using the body block 190 and/or the indicator markings 191a, 191b can help ensure the airbag assembly 130 is properly positioned (e.g., centered relative to the occupant) such that deployment of an airbag of the airbag assembly 130 properly reduces the impact experienced by the occupant.

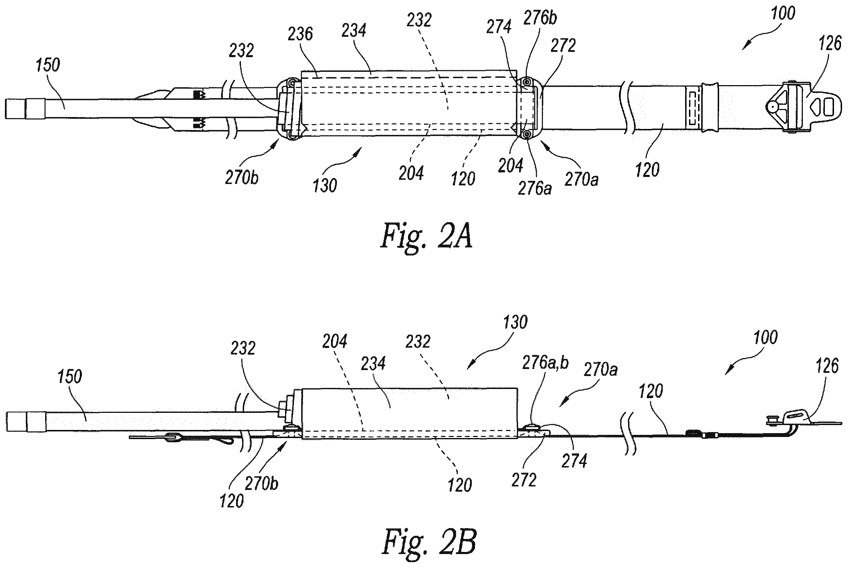

Figures 2A and 2B are top and side views, respectively, of the occupant restraint system 100 configured in accordance with embodiments of the present technology. For illustrative purposes, the cover assembly 140 has been omitted from Figures 2A and 2B. Referring to Figures 2A and 2B together, the occupant restraint system 100 includes the airbag assembly 130 coupled to the web 120 (e.g., a first web). The airbag assembly 130 can include a second web 204, an airbag 232 coupled to the second web 204, and a cover panel 234 wrapped around at least a portion of the airbag 232. The airbag 232 can be referred to as a barrier airbag that is intended to act as a cushioning barrier between an occupant and a strike hazard (e.g., a surface, object, etc.; not shown) and/or the occupant himself/herself (e.g., the occupant's knees, thighs, etc.). In the illustrated embodiment, the airbag 232 is in an undeployed configuration (e.g., a rolled or folded state), and the cover panel 234 is wrapped around the airbag 232 to maintain the airbag 232 in the undeployed configuration. In addition to surrounding the airbag 232, the cover panel 234 can also surround a portion of the first web 120 and/or a portion of the second web 204. In some embodiments, end portions of the cover panel 234 can be attached to one another via one or more seams 236 configured to be torn or unfastened upon inflation and deployment of the airbag 232. The one or more seams 236 can include stitching, rivets, fasteners or the like.

In the illustrated embodiment, the occupant restraint system 100 further includes a first fastening assembly 270a positioned adjacent a first end portion of the airbag assembly 130, and a second fastening assembly 270b positioned adjacent a second end portion of the airbag assembly 130. The second fastening assembly 270b can be identical or at least generally similar to the first fastening assembly 270a, and can thus include similar structures and functionality as described herein. The first fastening assembly 270a includes a first member 272 (e.g., a sliding member), a second member 274 (e.g., a clamping member), and fasteners 276a and 276b. The fasteners 276a, 276b can include, e.g., a screw or other means for attaching the first member 272 to the second member 274.

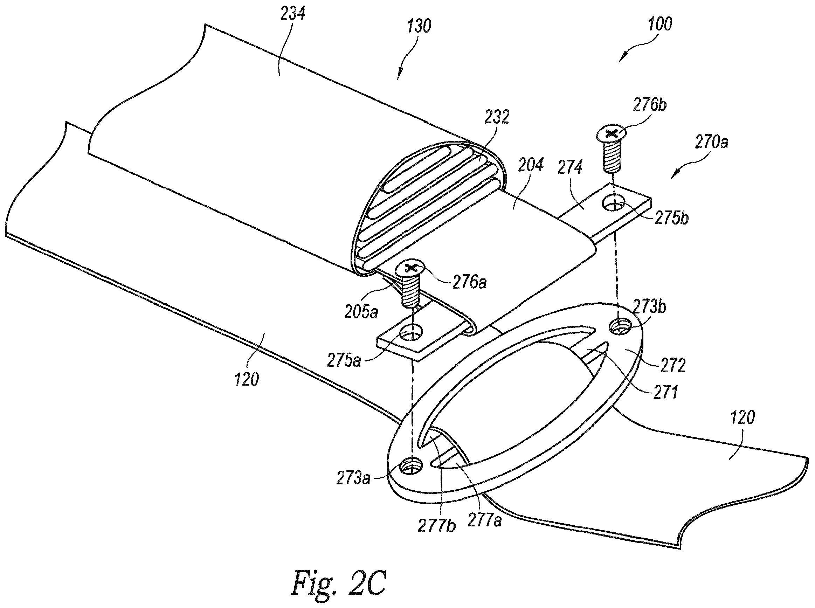

Figure 2C is a partially exploded top isometric view of a portion of the occupant restraint system 100 shown in Figures 1-2B. As shown in Figure 2C, the first member 272 of the first fastening assembly 270a includes a bar portion 271, a first web aperture 277a, and a second web aperture 277b. In some embodiments, the first member 272 may only include a single web aperture. The first member 272 can also include one or more openings (e.g., threaded openings) 273a, 273b for receiving and engaging the fasteners 276a, 276b. In the illustrated embodiment, the first member 272 receives the web 120 through the first web aperture 277a, over the bar portion 271, and through the second web aperture 277b. In such a configuration, the first member 272 can be moved (e.g., slidably moved) along a length of the web 120 to a desired position. For example, the first member 272 may be moved to a position on the web 120 that aligns with the indicator marking 191b of the body block 190, as described above with reference to Figure 1.

As previously described, the airbag assembly 130 can include the second web 204, the airbag 232 coupled to the second web 204, and the cover panel 234 at least partially surrounding the airbag 232 and the second web 204. The second web 204 can include a loop or opening 205a, 205b (only 205a is shown in Figure 2C) at each end of the second web 204. In the illustrated embodiment, the second member 274 of the first fastening assembly 270a is an elongate (e.g., generally rectangular) member that extends through the opening 205a, thereby coupling the second web 204 to the second member 274. Once the airbag assembly 130 is coupled to the second member 274, e.g., via the second web 204, the airbag assembly 130 can be coupled to the web 120 by coupling the second member 274 to the first member 272 via the fasteners 276a, 276b. In the illustrated embodiment, for example, the fasteners 276a, 276b extend through a corresponding opening 275a, 275b in the second member 274 and then into the corresponding opening 273a, 273b (e.g., threaded opening 273b) in the first member 272. The fasteners 276a, 276b can be partially installed in the threaded openings 273a, 273b so that the second member 274 is loosely installed on the first member 272, thereby allowing the first member 272 (and the second member 274) to be moved along at least a portion of the web 120 to locate the airbag assembly 230 in a desired position. Once in the desired position, the fasteners 276a, 276b can be tightened so that the web 120 is clamped firmly between the second member 274 and the bar portion 271 of the first member 272, thereby securing the airbag assembly 130 in the desired position.

For purposes of this disclosure, the first and second fastening assemblies 270a, 270b can be characterized as operating in a first mode and a second mode. The first mode is an adjusting mode in which the fastening assemblies 270a, 270b are coupled to the web 120, but are movable along at least a portion of the web 120. For example, in some embodiments of the first mode, the individual fastening assemblies 270a, 270b consists of only the first member 272, which can be easily moved along the web 120. In other embodiments of the first mode, the individual fastening assemblies 270a, 270b consists of the first member 272 and the second member 274, with the second member 274 being loosely attached to the first member 272 via the fasteners 276a, 276b, such that the web 120 routed through the first member 272 is not clamped by the second member 274, thereby enabling the fastening assemblies 270a, 270b to be moved along the web 120. Accordingly, in the first mode the first fastening assemblies 270a, 270b are not secured to the web 120 in a fixed position.

In the second mode, the fastening assemblies 270a, 270b are secured to the web in a fixed position. As such, the second mode is a clamping mode in which the individual fastening assemblies 270a, 270b include the first member 272 securely attached to the second member 274 via the fasteners 276a, 276b, such that the web 120 routed through the first member 272 is clamped by the second member 274. Stated differently, in the second mode, the second member 274, which is coupled to the second web 204 and thereby to the airbag 232, is tightly secured to the first member 272 and prevents the first member 272 from moving relative to the web 120. As described above, securing the second member 274 to the first member 272 also thereby couples the airbag 232 to the web 120. In the second mode, the first fastening assembly 270a can inhibit the airbag assembly 130 from moving along the web 120 in a first direction (e.g., toward the buckle assembly 126 shown in Figures 2A and 2B). Similarly, in those embodiments where the occupant restraint system includes the second fastening assembly 270b, the second fastening assembly 270b can inhibit the airbag assembly 130 from moving along the web 120 in a second direction, opposite to the first direction. While the illustrated embodiment of Figure 2C shows only the first fastening assembly 270a at the first end portion of the airbag assembly 130, the second fastening assembly 270b at the second end portion of the airbag assembly 130, as shown in Figures 2A and 2B, can include the same, or at least generally similar structure(s) and functionality as the first fastening assembly 270a.

Embodiments of the present technology can have advantages over conventional or traditional airbag assemblies. For example, unlike conventional airbag assemblies in which the airbag is fixed in a position along a length of the belt, embodiments of the present technology allow the position of the airbag to be adjusted along a length of the belt, thereby enabling a single occupant restraint system to be used on a variety of different aircraft seats and layouts (e.g., cabin layouts, cockpit layouts, etc.). More specifically, different models of private aircraft often have slightly different seats and/or seat layouts that result in seat belts having different lengths. For example, the distance between a buckle assembly of the belt and an end fitting of the belt may vary depending on where the end fitting attaches to the seat or on a nearby structure. Accordingly, because this length and/or other factors can differ for each seat and/or seat layout, the appropriate positioning of the airbag on the belt, which should generally align with the torso of the seat occupant, can also differ. Given the many different seats and layouts, and thus the different belt lengths associated with the different seats and layouts, manufacturers have traditionally designed each airbag equipped occupant restraint system to fit a particular type of seat and/or layout to ensure that the airbag assembly is properly positioned. This can result in significant expense for manufacturers.

Embodiments of the present technology address aspects of these challenges by, for example, allowing the airbag to be adjustably positioned along the web before being secured in a fixed position. In doing so, the same occupant restraint system design can accommodate multiple different seats and/or layouts. Stated differently, because the airbag of the present technology can be adjustably positioned on a web, the distance between the airbag and an end fitting of the web can be adjusted to accommodate the particular seat and/or seat layout, thereby ensuring that the airbag is appropriately positioned relative to the seat occupant. Accordingly, embodiments of the present technology provide for a single occupant restraint system that can be used for multiple different aircraft and/or occupants.

The airbag assemblies described above with reference to Figures 2A-2C can be altered in certain embodiments to achieve the same or similar functionality as described above. For example, while the first and second fastening assemblies 270a, 270b described above include multiple members (e.g., the first member 272 and the second member 274), in other embodiments the first and/or second fastening assemblies 270a, 270b can include just a single member with a means to fix and unfix the single member to the web 120. As another example, while Figures 2A-2C include two fastening assemblies (e.g., the first fastening assembly 270a and the second fastening assembly 270b), some embodiments may only include a single fastening assembly. In such an embodiment, the airbag assembly 130 may be positioned between the single fastening assembly and another structure on the web 120 (e.g., the buckle assembly 126 shown in Figures 2A and 2B), such that the airbag assembly 130 is inhibited from moving along the length of the web 120 by the single fastening assembly and the structure.

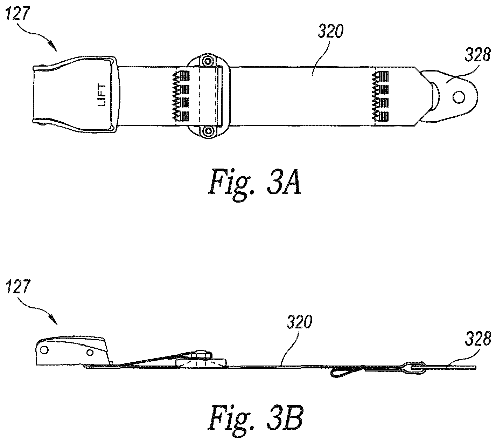

Figures 3A and 3B are top and side views, respectively, of a third web 320 configured to be operably coupled to the first web 120 described above with reference to Figures 1-2C. As shown in Figures 3A and 3B, the third web 320 can include an end fitting 328 at a first end (e.g., a proximal end) that is configured to be attached to a seat (e.g., the seat 110 shown in Figure 1) or on a nearby structure. The third web 320 can further include the buckle assembly 128 at a second end (e.g., a distal end) that is configured to be attached to a connector assembly (e.g., the connector assembly 126 described above with reference to Figures 1-2B).

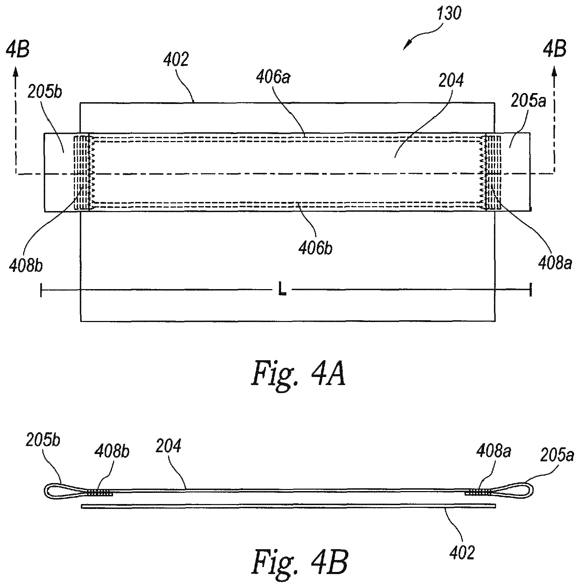

Figures 4A-4K are a series of views illustrating a method of forming the airbag assembly 130 shown in Figures 1-2C, in accordance with embodiments of the present technology. Referring first to Figure 4A, the airbag assembly 130 includes a base panel of material 402, and the second web 204 attached to the panel 402 via one or more stitched seams 406a, 406b extending through the panel 402 and the second web 204. The one or more seams 406a, 406b can extend along at least a portion of a length (L) of the second web 204. Referring to Figures 4A and 4B together, the second web 204 can include the loops 205a, 205b, on opposite end portions thereof as previously described in reference to Figure 2C. The individual loops 205a, 205b can be individually formed by folding a first portion of the second web 204 upon itself, and attaching the first portion to a second portion of the second web 204 via stitched seams 408a, 408b or other suitable fastening techniques. To ensure the loops 205a, 205b remain easily accessible, the length (L) of the second web 204 can be larger than that of the panel 402, as shown in the illustrated embodiment. For illustrative purposes, Figure 4B is an exploded view that omits the seams 406a, 406b.

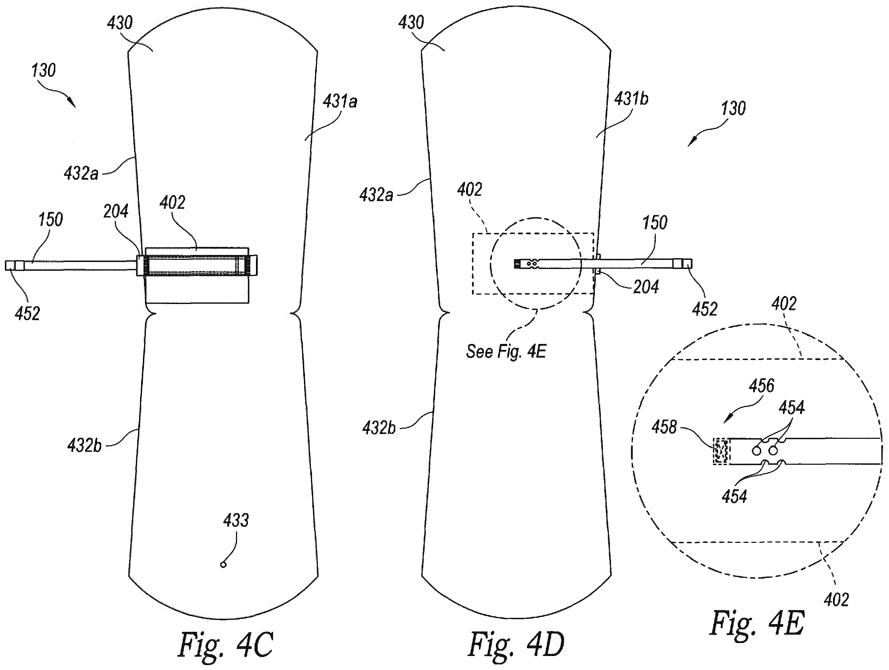

Figures 4C and 4D are plan views of a portion of the airbag assembly 130, with Figure 4C illustrating a first side 431a of an airbag panel 430, and Figure 4D illustrating a second side 431b of the airbag panel 430 opposite the first side 431a. The hose 150 includes an end fitting 452 configured to be attached to an inflator device, as described in detail below with reference to Figures 7A and 7B. Referring to Figures 4C and 4D together, the airbag panel 430 includes a first half 432a and a second half 432b that is a mirror image of the first half 432a. The second half 432b includes a vent hole 433 through which gas can escape after the airbag is inflated during operation, as described in detail below with reference to Figure 7A. The airbag panel 430 is positioned between the hose 150 and the panel 402 (and the second web 204), with the hose 150 being proximate the second side 431b of the airbag panel 430 and the panel 402 being proximate the first side 431a of the airbag panel 430.

Figure 4E is an enlarged view of the hose 150 and the airbag panel 430 shown in Figures 4C and 4D. As shown in Figure 4E, the hose 150 can be attached to the airbag panel 430 via one or more seams 458 ("seam 458"). For example, an end portion 456 (e.g., a distal terminus) of the hose 150 can be attached (e.g., stitched) to the airbag panel 430 via the seam 458 extending at least through the hose 150 and the airbag panel 430. In some embodiments, the stitching 458 can extend through the hose 150, the airbag panel 430, the patch 402 and the second web 204. As shown in the illustrated embodiment, the hose 150 includes one or more openings 454 positioned proximal of the seam 458. The one or more openings 454 allow gas, e.g., from an inflator, to pass through the hose to the airbag.

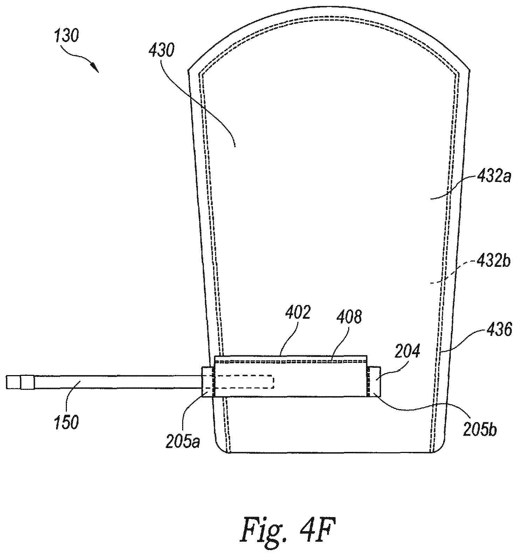

Figure 4F is a plan view of the airbag assembly 130 after the second half 432b of the airbag panel 430 has been folded to cover the second side 431b (Figure 4D) of the first half 432a of the airbag panel 430. A stitched seam 436 joins the first and second halves 432a, 432b together and extends around a perimeter of the airbag panel 430, except the portion of the airbag panel 430 across which the hose 150 passes. As such, the seam 436 includes an opening or gap through which the hose 150 extends. The seam 436 provides an interior volume of the airbag, and gas can be delivered to the interior volume via the hose 150 to rapidly inflate the airbag during deployment. In such a state, the airbag panel 430 is identical or at least generally similar to the airbag 232 previously described in Figures 2A-2C. In the illustrated embodiment, the panel 402 is folded around the second web 204, and a stitched seam 408 is formed through first and second overlapping edge portions of the panel 402 such that at least a portion of the second web 204 is enclosed by the folded panel 402. The seam 408 also extends through the first half 432a of the airbag panel 430. Notably, the loops 205a, 205b remain accessible after the seam 408 is formed.

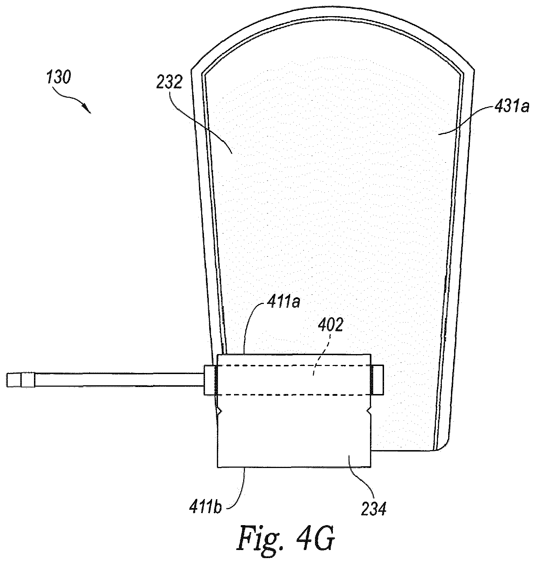

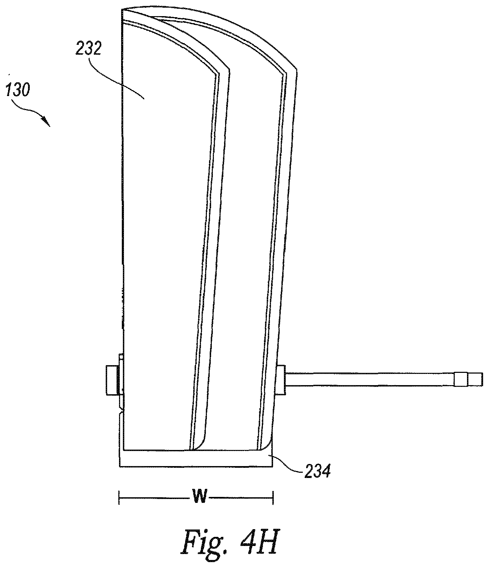

Figure 4G is a plan view of the airbag assembly 130, further including the cover panel 234, described above with reference to Figures 2A and 2B. The cover panel 234 is positioned over the folded panel 402 and the first side 431a of the airbag 232 such that the airbag 232 can be folded upon itself to be at least partially enclosed by the cover panel 234. The cover panel 234 includes a first end portion 411a and a second end portion 411b, with the second end portion 411b positioned beyond (e.g., below) a lowermost edge of the airbag 232. Figure 4H is a plan view of the airbag assembly 130 showing the opposite side of the airbag assembly 130 than Figure 4G. As shown in Figure 4H, a left edge of the airbag 232 is folded over on the airbag 232 such that the folded width of the airbag 232 is generally positioned within a width (W) of the cover panel 234.

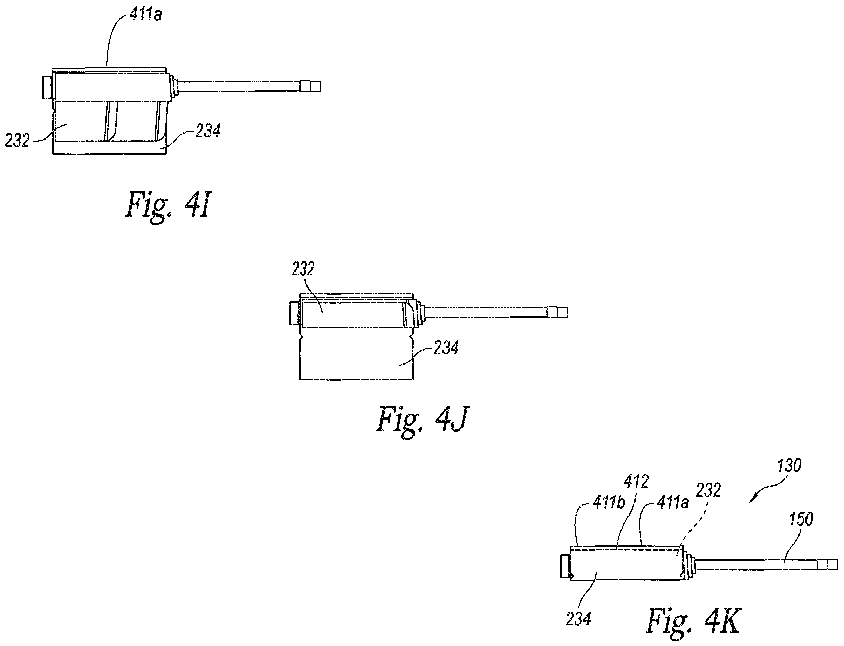

Figure 4I shows the airbag 232 after an upper portion of the airbag 232 has been rolled downward (or folded) upon the airbag 232 such that the upper portion is generally positioned (e.g., contained) within the cover panel 234 (e.g., below the first end portion 411a of the cover panel 234). In some embodiments, a roller bar (not shown) or other device may be used to ensure the airbag 232 is appropriately rolled according the manufacturing specifications. Figure 4J shows the airbag 232 after a lower portion of the airbag 232 has been rolled upward (or folded) upon the rest of the airbag 232. As shown in Figure 4K, once the airbag 232 has been rolled (or folded), the cover panel 234 can be folded upon itself to enclose at least a portion of the rolled airbag 232 therein. One or more seams 412 ("seam 412") can be formed (e.g., stitched) through the first and second end portions 411a, 411b of the cover panel 234 to join together and maintain the rolled airbag 232 in position (e.g., in a stowed and undeployed position). The seam 412 is configured to be torn apart upon airbag inflation via the hose 150.

As shown in the illustrated embodiment of Figure 4K, the airbag assembly 130 can be coupled to a web (e.g., the web 120 in Figures 1-2C) via one or more fastening assemblies (e.g., the first and/or second fastening assemblies 270a, 270b shown in Figures 2A-2C).

Figures 5A, 5B and 5C are top, bottom and side views, respectively, of the cover assembly 140 discussed above with reference to Figure 1. Referring to Figures 5A-5C together, the cover assembly 140 includes a first panel portion 542, first fasteners 548 (e.g., male fasteners), and a second panel portion 544 having second fasteners 550 (e.g., female fasteners) configured to be attached to the first fasteners 548. The first and second panel portions 542, 544 can be at least partially secured to one another via one or more seams 546a, 546b ("seams 546") having stitches that extend through the first and second panel portions 542, 544. In the illustrated embodiment, the seams 546 extend along sides of the first and second panel portions 542, 544, but not along the ends of the panel portions 542, 544. As discussed above with reference to Figure 1, the cover assembly 140 is configured to be positioned over the airbag assembly 130, and can protect the airbag assembly 130 from being damaged, e.g., from usage of the web 120 and/or normal wear-and-tear. In operation, the seams 546 are configured to tear upon inflation of the airbag assembly.

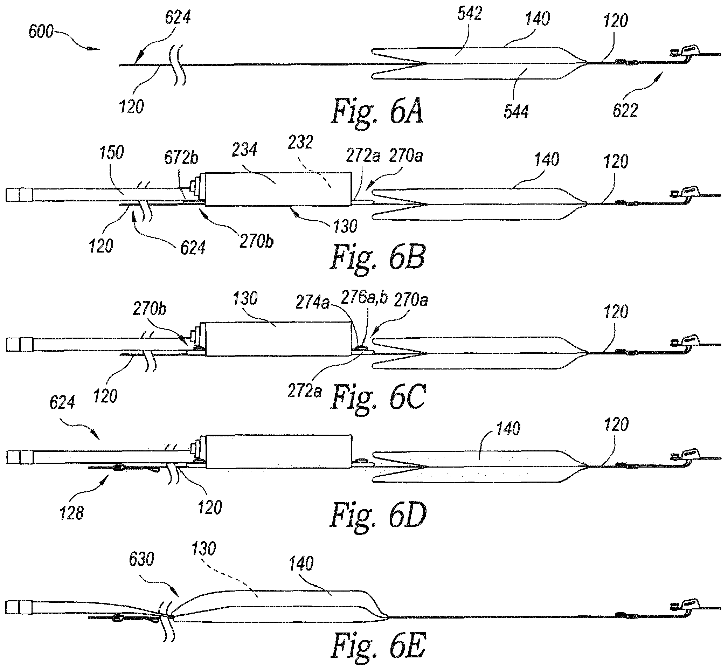

As shown in Figure 5C, the first and second panel portions 542, 544, when fastened together via the seams 546 and/or the first and second fasteners 548, 550, define a gap or opening 552 therebetween. As described in further detail below with reference to Figure 6A, in operation, the gap 552 receives the web 120 (Figures 1-2C) between the first and second panel portions 542, 544. The gap 552 can have a width (W) equal to or greater than a width of the web 120 extending therethrough.

Figures 6A-6E are a series of side views illustrating a method 600 of assembling an occupant restraint system (e.g., the occupant restraint system 100 described above with reference to Figures 1-2C). Referring first to Figure 6A, the method 600 includes positioning (e.g., slidably positioning) the cover assembly 140 on the web 120. For example, the cover assembly 140 can receive a first end portion 624 (e.g., a proximal end) of the web 120 through the gap 552 (Figure 5C) between the first and second panel portions 542, 544. The cover assembly 140 can then be slidably positioned toward a second end portion 622 (e.g., a distal end) of the web 120.

Referring next to Figure 6B, the method 600 can further include positioning the first member 272 of the first fastening assembly 270a on the web 120 proximate to the cover assembly 140. For example, the first member 272 can receive the web 120 by routing the first end portion 624 of the web 120 through the web apertures 277a, 277b of the first member 272 (Figure 2C). The method 600 can also include coupling the airbag assembly 130 to the web 120 by routing the first end portion 624 of the web 120 through the airbag assembly 130, e.g., between the rolled airbag 232 and the cover panel 234. In addition to or in lieu of the foregoing, the airbag assembly 130 can be coupled to the web 120 via the first fastening assembly 270a (as shown, for example, in Figure 2C). For example, a web (e.g., the second web 204) of the airbag assembly 130 can be directly coupled to the first fastening assembly 270a, as described above with reference to Figure 2C.

Still referring to Figure 6B, the method 600 can further include positioning a first member 672 of the second fastening assembly 270b on the web 120 by routing the first end portion 624 of the web 120 through the web apertures 277a, 277b of the first portion 672 (Figure 2C). The first member 672 can be identical, or at least generally similar to the first member 272. Once positioned on the web 120, the first member 272 of the first fastening assembly 270a, the airbag assembly 130, and the first member 672 of the second fastening assembly 270b can be slidably moved along the web 120 to position the airbag assembly 130 in a selected positon where it is to be fixed. Stated differently, the airbag assembly 130 can be adjustably positioned along the web 120, with the first member 272 of the first fastening assembly 270a positioned distal of the airbag assembly 130 and the first member 672 of the second fastening assembly 270b positioned proximal of the airbag assembly 130.

In some embodiments, adjusting the position of first member 272 of the first fastening assembly 270a and/or adjusting the position of the first member 672 of the second fastening assembly 270b can be based on the seat or seat layout of an aircraft, or based on dimensions of an average seat occupant. For example, with reference to Figure 1, an installer may use the one or more indicator markings 191a, 191b of the body block 190 as a guide to adjust the left-to-right positions of the first member 272 of the first fastening assembly 270a and/or the first member 672 of the second fastening assembly 270b. As described above, the first fastening assembly 270a and the second fastening assembly 270b can be said to be operating in the first mode when the first portion 272 of the first fastening assembly 270a and the first member 672 of the second fastening assembly 270b are moveable along the web 120.

Referring next to Figure 6C, the method 600 also can include securing (e.g., fixing) the airbag assembly 130 to the web 120 in the selected position. In some embodiments, securing the airbag assembly 130 to the web 120 can include coupling the loop 205a of the second web 204 to the second member 274 of the first fastening assembly 270a (Figures 2C and 2D), and attaching the second member 274 to the first member 272 via the fasteners 276a, 276b. A similar procedure can be performed to attach the airbag assembly 130 to the second fastening assembly 270b. As described above, the first member 272 cab ne loosely attached to the second member 274 such that the first and second members 272, 274 can be moved along the web 120. As also described above, the first fastening assembly 270a can be tightly secured to the second fastening assembly 270b, thereby securing or clamping the first fastening assembly 270a to the web 120 in a fixed position. As described above, in the second mode, the first fastening assembly 270a and the second fastening assembly 270b can inhibit the airbag assembly 130 from moving along the web 120.

Referring next to Figure 6D, the method 600 can further include attaching the end fitting 128 to the web 120. As shown in the illustrated embodiment, the end fitting 128 is attached to the first end portion 624 of the web 120. As previously described, the end fitting 128 can be used to attach the web 120 to a seat (e.g. the seat 110 referenced in Figure 1).

Referring next to Figure 6E, the method 600 can also include positioning (e.g., sliding) the cover assembly 140 along the web 120 to position the cover assembly 140 over the airbag assembly 130. Once the cover assembly 140 is positioned over the airbag assembly 130, an end portion 630 of the cover assembly 140 can be at least partially closed by attaching the first fasteners 548 referenced in Figures 5A-5C of the cover assembly 140 to the second fasteners 550 of the cover assembly 140. As shown in Figure 6E, in the illustrated embodiment, the cover assembly 140 is positioned such that the airbag assembly 130, the first fastening assembly 270a, and the second fastening assembly 270b are entirely covered by the cover assembly 140.

The occupant restraint systems and associated methods shown and described with reference to Figures 6A-6E can be altered in some embodiments to achieve the same or similar functionality as described above. For example, while the occupant restraint system shown in Figures 6A-6E includes two fastening assemblies (e.g., the first and second fastening assemblies 270a, 270b), some embodiments may only include a single fastening assembly. As another example, while the web 120 is shown in Figures 6A-6E to extend through the airbag assembly 130, e.g., between the airbag 232 and the cover panel 234 referenced in Figure 6B, in some embodiments, the web 120 may not extend through airbag assembly 130, and the airbag assembly 130 may instead, just be coupled to the web 120 via only the first and/or second fastening assemblies 270a, 270b. As yet another example, the order of operations for assembling the occupant restraint system may differ, as compared to the order shown in Figures 6A-6E. For example, the cover assembly 140 may be positioned on the web 120 after the airbag assembly 130 and/or first and second fastening assemblies 270a, 270b are positioned over the web 120.

Figure 7A is a partially schematic front view of the occupant restraint system 100 of Figures 1-2C, illustrating the airbag 232 in a deployed configuration. In the illustrated embodiment, the occupant restraint system 100 includes an inflator 754 that can be operably coupled to an electronics assembly 780 (shown schematically) via a corresponding electrical link 787 (e.g., a wire, electrical line, retractile cord, connector, wireless communication link, etc.). The electronics assembly 780 (e.g., an electronics module assembly ("EMA")), can include one or more crash sensors 781 (e.g., an acceleration sensor, a magnetic field sensor, etc.) and associated devices and circuitry configured to detect a rapid deceleration event above a preset magnitude, and transmit one or more corresponding signals to the inflator 754 via the electrical link 787 to initiate deployment of the airbag 232.

The inflator 754 can include a canister, cylinder, and/or other container filled with air or a substantially inert compressed gas (e.g., nitrogen, helium, argon, etc.). The gas can be released by a spike in internal pressure caused by a pyrotechnic, electric, or other initiation device (not shown) that is activated by an electrical signal from the electronics assembly 780 in response to a rapid deceleration event or similar dynamic event (e.g., an impact, collision, crash, acceleration, etc.). In other embodiments, the inflator 754 can include a propellant-based gas generating device and/or other gas sources suitable for airbag inflation. The inflator 754 is operably coupled to a first end portion (e.g., end portion 452 referenced in Figures 4C and 4D) of the hose 150. As previously described, a second end portion of the hose 150 can be operably connected to the airbag assembly 130 so that gas flows from the inflator 754 to the airbag 232 during deployment thereof.

In operation, the occupant restraint system 100 can protect an occupant 795 during a crash, rapid deceleration event, or other type of dynamic event above a preset level of deceleration. For example, upon detection of such an event, the electronics assembly 780 can transmit a signal to the inflator 754 via the electrical link 787, causing the compressed gas stored within the inflator 754 to rapidly inflate the airbag 232 via the hose 150. As shown in Figure 7A, the airbag 232 can be deployed upwardly from the web 120 toward a head region 796 of the occupant 795 and in front of the occupant 795 to provide forward impact protection. The vent hole 433 of the airbag 232 allows gas to escape from the airbag 232 after inflation. In some embodiments, the vent hole 433 can help limit rebound of the occupant 795 from the airbag 232, and can help deflate the airbag 232 to allow egress for the occupant 795 shortly after inflation. The airbag 232 may be of particular use when incorporated into aircraft and other vehicle seats with movable seat backs.

In the illustrated embodiment, the airbag 232 is carried on or otherwise supported by the web 120 as described in detail above. In other embodiments, the airbag 232 can be carried on and deployed from other portions of web or other structures (e.g., adjacent vehicle or seat structures). For example, in certain embodiments the airbag 232 can deploy from a shoulder web (not shown), that extends across the torso of the occupant 795.

As schematically illustrated in Figure 7B, according to embodiments of the present technology, the electronics assembly 780 can include a microprocessor 784 that receives electrical power from a power source 786 (e.g., one or more batteries). The one or more crash sensors 781 can detect a rapid deceleration event and communicate this event to the microprocessor 784. For example, in operation, when the sensor 781 detects a rapid deceleration or other crash event above a preset magnitude, one or more switches in the sensor 781 can close and cause the microprocessor 784 to send a corresponding signal to a deployment circuit 782. Upon receiving the signal from the microprocessor 784, the deployment circuit 782 transmits a signal to the inflator 754 via the electrical link 787 to initiate deployment of the airbag 232, e.g., by discharging gas into the airbag 232 via the hose 150.

Various occupant restraint systems and/or associated components are described in U.S. Patent Application No. 13/274,659, filed June 30, 2011, now U.S. Patent No. 9,156,558, and titled INFLATABLE PERSONAL RESTRAINT SYSTEMS; U.S. Patent Application No. 09/143,756, filed August 13, 1998, now U.S. Patent No. 5,984,350, and titled VEHICLE SAFETY SYSTEM; U.S. Patent Application No. 10/672,606, filed September 26, 2003, now U.S. Patent No. 6,957,828, and titled INFLATABLE LAP BELT SAFETY BAG; U.S. Patent Application No. 09/253,874, filed March 13, 2000, now U.S. Patent No. 6,439,600, and titled SELF-CENTERING AIRBAG AND METHOD FOR MANUFACTURING AND TUNING THE SAME; U.S. Patent Application No. 09/523,875, filed March 13, 2000, now U.S. Patent No. 6,535,115, and titled AIR BAG HAVING EXCESSIVE EXTERNAL MAGNETIC FIELD PROTECTION CIRCUITRY; U.S. Patent Application No. 09/524,370, filed March 14, 2000, now U.S. Patent No. 6,217,066, and titled MULTIPLE INFLATOR SAFETY CUSHION; U.S. Patent Application No. 12/057,295, filed March 27, 2008, now U.S. Patent No. 7,665,761, and titled INFLATABLE PERSONAL RESTRAINT SYSTEMS AND ASSOCIATED METHODS OF USE AND MANUFACTURE; U.S. Patent Application No. 12/051,768, filed March 19, 2008, now U.S. Patent No. 7,980,590, and titled INFLATABLE PERSONAL RESTRAINT SYSTEMS HAVING WEB-MOUNTED INFLATORS AND ASSOCIATED METHODS OF USE AND MANUFACTURE; U.S. Patent Application No. 13/608,959, filed September 10, 2012, now U.S. Patent No. 9,276,202, and titled ELECTRONIC MODULE ASSEMBLY FOR INFLATABLE PERSONAL RESTRAINT SYSTEMS AND ASSOCIATED METHODS; U.S. Patent Application No. 13/270,079, filed June 27, 2011, now abandoned, and titled SENSORS FOR DETECTING RAPID DECELERATION/ACCELERATION EVENTS; U.S. Patent Application No. 13/194,411, filed July 29, 2011, now U.S. Patent No. 8,439,398, and titled INFLATOR CONNECTORS FOR INFLATABLE PERSONAL RESTRAINTS AND ASSOCIATED SYSTEMS AND METHODS; U.S. Patent Application No. 13/227,392, filed September 7, 2011, now U.S. Patent No. 8,556,293, and titled BUCKLE CONNECTORS FOR INFLATABLE PERSONAL RESTRAINTS AND ASSOCIATED METHODS OF USE AND MANUFACTURE; U.S. Patent Application No. 13/086,234, filed April 13, 2011, now U.S. Patent No. 8,469,397, and titled STITCH PATTERNS FOR RESTRAINT-MOUNTED AIRBAGS AND ASSOCIATED SYSTEMS AND METHODS; U.S. Patent Application No. 13/227,382, filed September 7, 2011, now U.S. Patent No. 8,403,361, and titled ACTIVATION SYSTEMS FOR INFLATABLE PERSONAL RESTRAINT SYSTEMS; U.S. Patent Application No. 13/228,333, filed September 8, 2011, now U.S. Patent No. 8,818,759, and titled COMPUTER SYSTEM FOR REMOTE TESTING OF INFLATABLE PERSONAL RESTRAINT SYSTEMS; U.S. Patent Application No. 13/424,197, filed March 19, 2012, now U.S. Patent No. 8,523,220, and titled STRUCTURE MOUNTED AIRBAG ASSEMBLIES AND ASSOCIATED SYSTEMS AND METHODS; and U.S. Patent Application No. 15/002,237, filed January 20, 2016, and titled OCCUPANT RESTRAINT SYSTEMS HAVING EXTENDING RESTRAINTS, AND ASSOCIATED SYSTEMS AND METHODS. Each of the patents and patent applications listed above is incorporated herein by reference in its entirety. Indeed, any patents and applications and other references identified herein, including any that may be listed in accompanying filing papers, are incorporated herein by reference in their entirety. Aspects of the present technology can be modified, if necessary, to employ the systems, functions, and concepts of the various references described above to provide yet further implementations of the present technology. To the extent that a portion of the present disclosure contradicts a portion of any of the above-noted patents or patent applications, the present disclosure should be used.

From the foregoing, it will be appreciated that specific embodiments of the present technology have been described herein for purposes of illustration, but that various modifications may be made without deviating from the scope of the present technology. Accordingly, the present technology is not limited except as by the appended claims.

## Claims

1. An airbag assembly for use with a web of an occupant restraint at an aircraft seat, the airbag assembly comprising:
an airbag; and
a fastening assembly configured to receive the web of the occupant restraint, wherein-
the fastening assembly is positionable in a first mode in which the fastening assembly is movable along at least a portion of the web, and
the fastening assembly is positionable in a second mode in which the fastening assembly is coupled to the airbag and fixed to the web in a selected position.

2. The airbag assembly of claim 1 wherein the fastening assembly includes at least one web aperture, wherein the web of the occupant restraint is able to slidably move through the web aperture when the fastening assembly is positioned in the first mode, and wherein the web is fixed relative to the web aperture when the fastening assembly is positioned in the second mode.

3. The airbag assembly of claim 1 wherein the fastening assembly is a first fastening assembly, the airbag assembly further comprising a second fastening assembly positionable in the first mode and the second mode and configured to receive the web of the occupant restraint, wherein the first fastening assembly inhibits the airbag from moving along the web in a first direction when the first fastening assembly is in the second mode, and wherein the second fastening assembly inhibits the airbag from moving along the web in a second direction, opposite the first direction, when the second fastening assembly is in the second mode.

4. The airbag assembly of claim 1 wherein, in the second mode:
the fastening assembly includes a first member and a second member attached to the first member via one or more fasteners, and
the one or more fasteners secure the first and second members to the web in the selected position.

5. The airbag assembly of claim 4 wherein the one or more fasteners extend through the first and second members, thereby securing the airbag to the web in the selected position.

6. The airbag assembly of claim 1 wherein the fastening assembly includes a slidable member having a bar portion adjacent one or more web apertures, and wherein the slidable member is configured to receive the web through each of the one or more web apertures with the web passing over the bar portion.

7. The airbag assembly of claim 1, further comprising:
a hose coupled to the airbag and configured to deliver gas to the airbag;
an inflator in fluid communication with the airbag via the hose; and
an electronics assembly communicatively coupled to the inflator, wherein the electronics assembly is configured to transmit a signal to the inflator to cause initiation of the inflator, thereby causing deployment of the airbag.

8. The airbag assembly of claim 1 wherein the web of the occupant restraint is a first web, the airbag assembly further comprising:
a second web coupled to the airbag, wherein the second web includes an end portion coupled to the fastening assembly when the fastening assembly is in the second mode.

9. The airbag assembly of claim 8, further comprising a cover panel at least partially surrounding the airbag and the second web, wherein the cover panel includes a first edge portion and a second edge portion fixed to the first edge portion via a seam, and wherein the seam is tearable upon inflation of the airbag.

10. The airbag assembly of claim 1 wherein the web of the occupant restraint is a first web having a first end portion and a second end portion opposite the first end portion, and wherein the airbag assembly further comprises:
a connector attached to the first end portion of the first web; and
a fitting attached to the second end portion of the first web,
wherein the connector is configured to be releasably engaged with a buckle assembly of a second web to form a seat belt configured to extend around a least a portion of an occupant of the aircraft seat, and wherein the fitting is configured to be attached to an anchor point on or adjacent the aircraft seat.

11. A restraint system for use with an aircraft seat, the restraint system comprising:
a web configured to extend around at least a portion of a seat occupant;
an airbag assembly having a first end portion and a second end portion opposite the first end portion;
a first fastening assembly positioned toward the first end portion; and
a second fastening assembly positioned toward the second end portion, wherein the first and second fastening assemblies are configured to -
slidably receive the web in a first mode, and
fixedly engage the web in a second mode.

12. The restraint system of claim 11 wherein, in the second mode, the first fastening assembly inhibits the airbag assembly from moving along the web in a first direction and the second fastening assembly inhibits the airbag assembly from moving along the web in a second direction opposite the first direction.

13. The restraint system of claim 11 wherein, in the second mode, each of the first fastening assembly and the second fastening assembly includes a first member and a second member attached to the first member to clamp the web therebetween and prevent the airbag assembly from moving along the web.

14. The restraint system of claim 11 wherein the airbag assembly includes an airbag configured to be deployed toward (a) a head region of an occupant in the aircraft seat and (b) a forward area of the occupant.

15. A method of positioning an airbag assembly on an occupant restraint of an aircraft seat, the method comprising:
positioning a fastening assembly on a web of the occupant restraint;
moving the fastening assembly to a selected location along the web;
before or after moving the fastening assembly, coupling the airbag assembly to the fastening assembly; and
before or after coupling the airbag assembly to the fastening assembly, securing the fastening assembly to the web to inhibit the airbag assembly from moving along the web.

16. The method of claim 15 wherein securing the fastening assembly to the web includes attaching the airbag assembly to the web in the selected location relative to the aircraft seat.

17. The method of claim 15 wherein positioning the fastening assembly on the web includes routing the web through a web aperture of the fastening assembly.

18. The method of claim 15 wherein:
positioning the fastening assembly on the web includes slidably positioning a first member of the fastening assembly on the web,
coupling the airbag assembly to the fastening assembly includes coupling the airbag assembly to a second member of the fastening assembly, and
securing the fastening assembly to the web includes attaching the second member to the first member to secure the web therebetween.

19. The method of claim 18 wherein attaching the second member to the first member includes attaching the second member to the first member via one or more fasteners extending through the second member and the first member.

20. The method of claim 15 wherein the web is a first web, the method further comprising:
attaching an airbag of the airbag assembly to a second web,
wherein coupling the airbag assembly to the fastening assembly includes coupling the second web to the fastening assembly.

21. The method of claim 15 wherein the web is a first web and the airbag assembly includes an airbag attached to a second web, the method further comprising forming the airbag assembly by:
coupling a hose to the airbag;
rolling the airbag to form a rolled airbag; and
surrounding at least a portion of the rolled airbag and the second web with a cover panel.

22. The method of claim 15, further comprising:
positioning a cover assembly on a portion of the web spaced apart from the fastening assembly; and
after coupling the airbag assembly to the fastening assembly, moving the cover assembly over the airbag assembly to enclose the airbag assembly within the cover assembly.
